# EUROPEAN PATENT SPECIFICATION

(11) **EP 1 619 080 B1**
(45) Date of publication and mention of the grant of the patent: **18.04.2007**
(21) Application number: 04017215.7
(22) Date of filing: 21.07.2004
(51) Int. Cl.: B60R 11/02

(54) **Dial system for steering wheel of an automobile**
Rufnummerwahlvorrichtung für das Lenkrad eines Kraftfahrzeuges
Dispositif de numérotation pour volant de véhicule

(43) Date of publication of application: 25.01.2006
(73) Proprietor: Sunrex Technology Corp., Taichung Hsien, Taiwan (CN)
(72) Inventor: Tsai, Huo-Lu, Taichung Hsien Taiwan (CN)
(74) Representative: Viering, Jentschura & Partner

(56) References cited:
- EP-A- 1 063 129
- DE-U- 29 702 001
- GB-A- 2 256 916
- US-B1- 6 209 767
- US-B1- 6 567 676

## Description

### BACKGROUND OF THE INVENTION

### 1. Field of the Invention

The present invention relates to dial system, and more particularly to a dial system for steering wheel of an automobile co-operating with a mobile phone.

### 2. Description of Related Art

A conventional mobile phone with a hand-free receiver in accordance with the prior is mounted in an automobile so that the driver in the automobile can perform the dialogue function during driving operating the steering wheel of the automobile without having to hold the mobile phone during driving.

However, the driver still to press the press buttons on the mobile phone for performing a dial function whereby the driver's hand has to leave the steering wheel so as to press the press buttons while the driver has to turn around his head to watch the numbers on the press buttons for dialing the correct telephone numbers so that the driver's view of sight will deviate the direction of travel of the automobile, thereby easily causing danger to the driver during driving.

There are many inventions are provided to overcome the above problem, such as the US Pat. 6,339,700 and US pat. 6,567,676. However, the two patents contain some disadvantages that need to be advantageously altered. As to the US pat. 6,339,700, the buttons are mounted on the steering wheel and equally divided the steering wheel into several sections. Consequently, the buttons are separated from one another. It is hard to dial a complete telephone number and the driver may unwillingly press the buttons during turning the steering wheel. As to the US pat. 6,567,676, the dial communication devices respectively clamp the steering wheel so that the connection between the dial communication devices and the steering wheel is unstable. In addition, the signal from the two dial communication devices to the mainframe is either wireless or transmitted by wires that may be entwined when the driver turns the steering wheel in case the dial system is wireless, no allusion is made to as how these dial members are energized.

The present invention has arisen to mitigate and/or obviate the disadvantages of the conventional dial device that is mounted on the steering wheel of an automobile.

### SUMMARY OF THE INVENTION

The main objective of the present invention is to provide an improved dial system for steering wheel of an automobile co-operating with a mobile phone for promoting the safety when dialing telephone number during driving.

To achieve the objective, the dial system in accordance with the present invention is divided into two portions electrically connected by a cable and each includes a first casing and a dial set received in the first housing. The dial set includes a number button and multiple functional buttons partially extending the first housing for being operated. A circuit board is received in the first housing for wirelessly transmitting signals when the buttons are operated. A second housing is mounted to the first housing to form a space for receiving the dial set and the circuit board. A battery seat with battery is laterally inserted into the space for providing power to the circuit board. A clamp is mounted to a bottom of the second housing and clamps the steering wheel to hold the dial system in place on the steering wheel for an easy operation.

Further benefits and advantages of the present invention will become apparent after a careful reading of the detailed description with appropriate reference to the accompanying drawings.

### BRIEF DESCRIPTION OF THE DRAWINGS

Fig. 1 is a perspective schematic view of a dial system for steering wheel of an automobile;
Fig. 2 is a partially exploded perspective view of the dial system in Fig. 1;
Fig. 3 is a partially exploded perspective view of the dial system in Fig. 1;
Fig. 4a is a cross-sectional view of the dial system of the present invention along line X-X in Fig. 3;
Fig. 4b is a cross sectional view of the dial system of the present invention along line Y-Y in Fig. 3; and

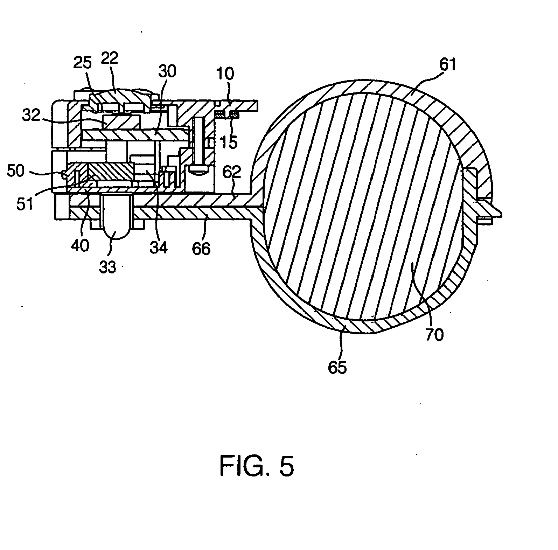

Fig. 5 is a cross-sectional view of the dial system of the present invention along line Z-Z in Fig. 3.

### DETAILED DESCRIPTION OF THE INVENTION

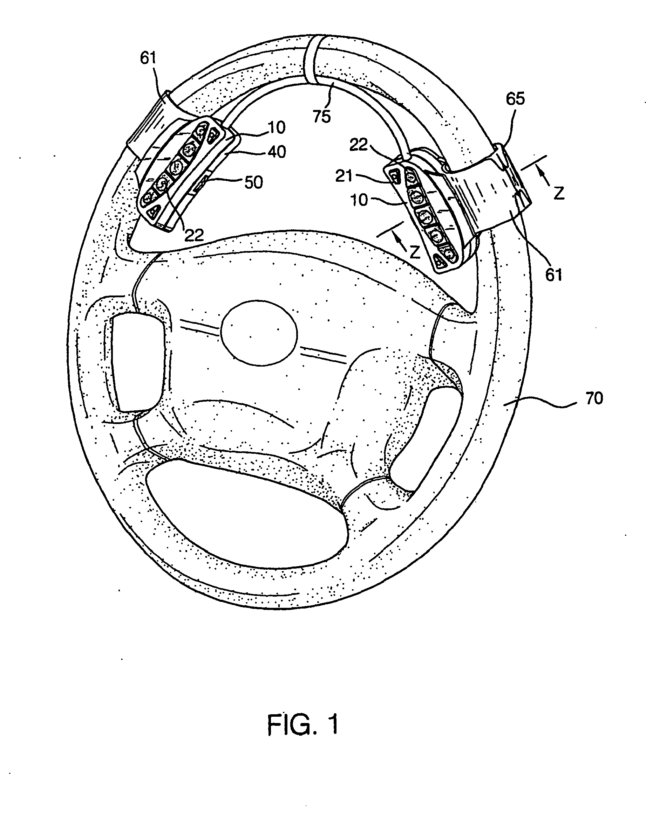

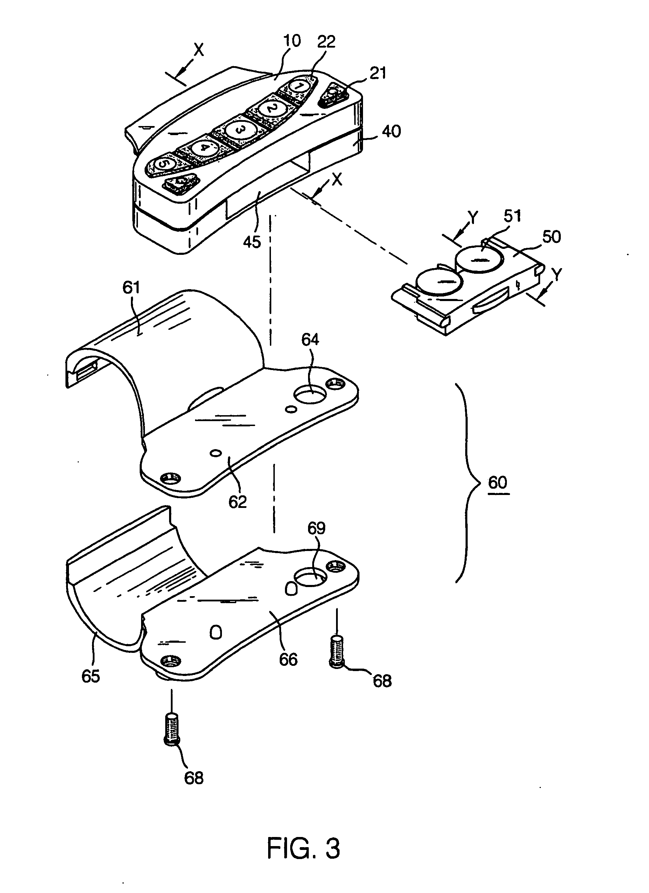

Referring to the drawings and initially to Figs. 1-3, a dial system for steering wheel of an automobile in accordance with the present invention is divided into two portions corresponding to each other. Consequently, we only described one of the two portions of the present invention. Each of the two portions of the present invention comprises a first housing (10), a dial set (20) received in the first housing (10), a circuit board (30) mounted in the first housing (10), a second housing (40) attached to the first housing (10) for containing the dial set (20) and the circuit board (30) with the first housing (10). A battery seat (50) with battery (51) is laterally inserted into the second housing (40) for providing power to the present invention. A clamp (60) is mounted to a bottom of the second housing (40) and clamping the steering wheel (70) for positioning the present invention on the steering wheel (70).

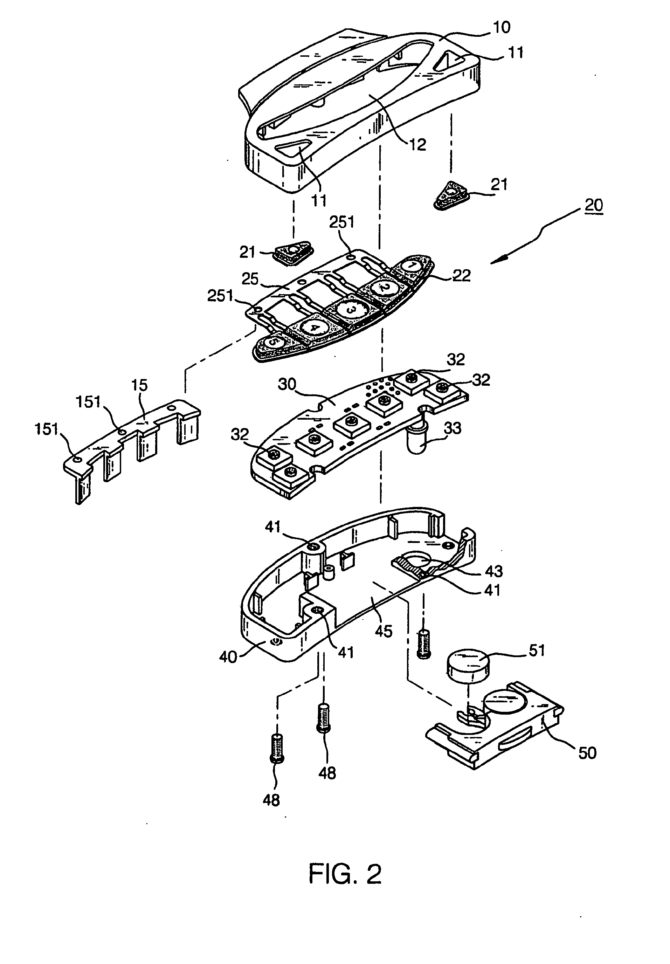

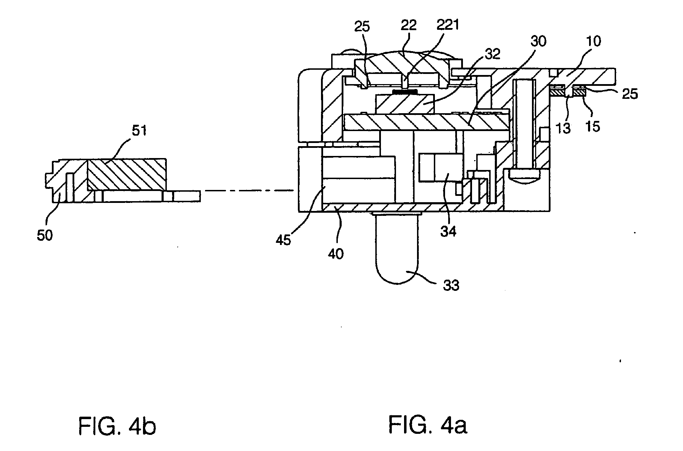

With reference to Figs. 2 and 4, the first casing (10) is longitudinal and slightly curved. A longitudinal opening (12) is defined in a top of the first housing (10), and two openings (11) are defined in the top of the first housing (10) and corresponding to two opposite ends of the longitudinal opening (12). The first housing (10) includes multiple stubs (13) downwardly extending therefrom.

The dial set (20) includes a longitudinal number button (22) mounted on a metal plate (25) and received in the longitudinal opening (12), and two functional button (21) respectively received in the two openings (11) in the first casing (10). The metal plate (25) has multiple bores (251) defined in one side thereof opposite to the number button (22) to allow the multiple stubs (13) extending through the metal plate (25). A stopper (15) is mounted to the first casing (10) to hold the metal plate (25) in place. The stopper (15) has multiple bores (151) each defined to stably receive the stubs (13) for holding the metal plate (25) in place.

The circuit board (30) includes multiple button switches (32) electrically mounted thereon. Each button switch (32) aligns with a corresponding one of the longitudinal number button (22) and the functional buttons (21). The button switches (32) are operated when the corresponding number button (22)/functional button (21) is pressed. A wireless transmitter (33) is electrically mounted on a bottom of the circuit board (30) for wirelessly transmitting signals when the button switches (32) are operated. In the preferred embodiment of the present invention, the wireless transmitter (33) transmits signals by infrared ray or radio frequency (RF) to a mainframe (not shown).

The second housing (40) is securely mounted to the first housing (10) to form a space (not numbered) for receiving the dial set (20) and the circuit board (30). The second housing (40) includes multiple threaded hole (41) defined therein and extending therethrough. Multiple screws (48) are screwed through the threaded holes (41) and extend into the first housing (10) to combine the first housing (10) and second housing (40). A hole (43) is defined in a bottom of the second housing (40) to allow the wireless transmitter (33) extending through the second housing (40). A lateral opening (45) is defined in the second housing (40) to allow the battery seat (50) inserted into the space between the first housing (10) and the second housing (40) to provide power to the circuit board (30).

Two batteries (51) are received in the battery seat (50) and electrically connected to a connector (34) that extends from the bottom of the circuit board (30) when the battery seat (50) inserted into the space between the first housing (10) and the second housing (40).

The clamp (60) includes a curved first portion (61) and a curved second portion (65) each having a fixing plate (62, 66) laterally extending from one side thereof and abutting each other and corresponding to the shape of the steering wheel (70). The fixing plates (62, 66) each has a hole (64, 69) defined therein and aligning with each other. The wireless transmitter (33) extends through the holes (64, 69) in the clamp (60) after the present invention being assembled. The clamp (60) is secured on a bottom of the second housing (40) by bolts (68).

As described above, the present invention is divided into two portions respectively mounted on the steering wheel (70) and electrically connected by a cable (75). Consequently, the driver can easily dial telephone number with his/her thumbs without turning head for promoting the safety of drive. In addition, the separated design of the present invention corresponds to the ergonomics such that the driver can easily dial buttons (21, 22) when holding the steering wheel (70).

Although the invention has been explained in relation to its preferred embodiment, it is to be understood that many other possible modifications and variations can be made without departing from the spirit and scope of the invention as hereinafter claimed.

## Claims

1. A dial system for steering wheel of an automobile divided into two portions electrically connected by a cable and each comprising:
a first casing including a longitudinal opening and multiple openings defined therein;
a dial set received in the first housing and including a metal plate mounted to the first housing, a number button secured on the metal plate and received in the longitudinal opening in the first casing, and multiple functional buttons each received in a corresponding one of the multiple openings in the first housing;
a circuit board received in the first housing, the circuit board including multiple button switches each align with a corresponding one of the functional buttons and the number the button, a wireless transmitter electrically mounted on the circuit board for wirelessly transmitting signals when the button switches are operated;
a second housing mounted to the first housing to form a space for receiving the dial set and the circuit board;
a battery seat with battery laterally inserted into the space between the first housing and the second housing, the battery electrically connected to the circuit board for providing power to the circuit board when the battery seat inserted into the space between the first housing and the second housing;
a clamp mounted to a bottom of the second housing and adapted to clamp the steering wheel to hold the dial system in place on the steering wheel for an easy operation.

2. The dial system as claimed in claim 1, wherein the first housing comprises multiple stubs extending therefrom and extending through the metal plate, a stopper having multiple bores defined to securely receive the multiple stubs after extending through the metal plate to hold the metal plate in place.

3. The dial system as claimed in claim 1, wherein the wireless transmitter extends through the second housing and transmits signals to a mainframe by infrared rays.

4. The dial system as claimed in claim 1, wherein the wireless transmitter extends through the second housing and transmits signals to a mainframe by radio frequency (RF).

5. The dial system as claimed in claim 3, wherein the clamp includes a curved first portion and a curved second portion each having a fixing plate laterally extending from one side thereof and abutting each other and corresponding to the shape of the steering wheel, each fixing plate having a hole defined therein and aligning with each other, the wireless transmitter extending through the hole in each of the fixing plates after the dial system being assembled.

6. The dial system as claimed in claim 4, wherein the clamp includes a curved first portion and a curved second portion each having a fixing plate laterally extending from one side thereof and abutting each other and corresponding to the shape of the steering wheel, each fixing plate having a hole defined therein and aligning with each other, the wireless transmitter extending through the hole in each of the fixing plates after the dial system being assembled.

## Patentansprüche

1. Wählsystem für ein Lenkrad eines Kraftfahrzeugs, wobei das Lenkrad in zwei durch ein Kabel elektrisch verbundene Teile geteilt ist und wobei jeder Teil aufweist:
ein erstes Gehäuse, das eine Längsöffnung und mehrere darin ausgebildete Öffnungen aufweist;
einen Wählsatz, der in dem ersten Gehäuse aufgenommen ist und eine an dem ersten Gehäuse montierte Metallplatte, einen Nummernknopf, der an der Metallplatte befestigt ist und in der Längsöffnung in dem ersten Gehäuse aufgenommen ist, und mehrere Funktionsknöpfe aufweist, von denen jeder in einer zugehörigen Öffnung der mehreren Öffnungen in dem ersten Gehäuse aufgenommen ist;
eine Platine, die in dem ersten Gehäuse aufgenommen ist, wobei die Platine mehrere Knopfschalter, von denen jeder nach einem entsprechenden der Funktionsknöpfe und des Nummernknopfes ausgerichtet ist, und einen auf der Platine montierten drahtlosen Sender zum drahtlosen Senden von Signalen, wenn die Knopfschalter betätigt werden, aufweist;
ein zweites Gehäuse, das an dem ersten Gehäuse montiert ist, damit ein Raum zur Aufnahme des Wählsatzes und der Platine gebildet wird;
einen Batteriesitz mit Batterie, der seitlich in den Raum zwischen dem ersten Gehäuse und dem zweiten Gehäuse eingeführt ist, wobei die Batterie elektrisch mit der Platine zum Liefern von Energie an die Platine verbunden ist, wenn der Batteriesitz in den Raum zwischen dem ersten Gehäuse und dem zweiten Gehäuse eingeführt ist;
eine Klemmvorrichtung, die an einer Unterseite des zweiten Gehäuses montiert ist und eingerichtet ist, das Lenkrad einzuklemmen, um das Wählsystem für eine einfache Bedienung an der Stelle an dem Lenkrad zu halten.

2. Wählsystem gemäß Anspruch 1, wobei das erste Gehäuse mehrere Nasen, die sich von diesem aus erstrecken und sich durch die Metallplatte hindurch erstrecken, und einen Anschlag mit mehreren Bohrungen aufweist, die derart ausbildet sind, um die mehreren Nasen nach dem Erstrecken durch die Metallplatte hindurch sicher aufzunehmen, um die Metallplatte an der Stelle zu halten.

3. Wählsystem gemäß Anspruch 1, wobei sich der drahtlose Sender durch das zweite Gehäuse hindurch erstreckt und Signale zu einem Hauptgerät mittels Infrarotstrahlen sendet.

4. Wählsystem gemäß Anspruch 1, wobei sich der drahtlose Sender durch das zweite Gehäuse hindurch erstreckt und Signale zu einem Hauptgerät mittels Hochfrequenz (HF) sendet.

5. Wählsystem gemäß Anspruch 3, wobei die Klemmvorrichtung einen bogenförmigen ersten Teil und einen bogenförmigen zweiten Teil aufweist, wobei jeder Teil eine Befestigungsplatte aufweist, die sich seitlich von einer Seite von diesem erstreckt, und die aneinander stoßen und mit der Form des Lenkrades korrespondieren, wobei jede Befestigungsplatte ein darin ausgebildetes Loch aufweist und die zueinander ausgerichtet sind, wobei sich der drahtlose Sender durch das Loch in jeder der Befestigungsplatten hindurch erstreckt, nachdem das Wählsystem zusammengebaut wurde.

6. Wählsystem gemäß Anspruch 4, wobei die Klemmvorrichtung einen bogenförmigen ersten Teil und einen bogenförmigen zweiten Teil aufweist, wobei jeder Teil eine Befestigungsplatte aufweist, die sich seitlich von einer Seite von diesem erstreckt, und die aneinander stoßen und mit der Form des Lenkrades korrespondieren, wobei jede Befestigungsplatte ein darin ausgebildetes Loch aufweist und die zueinander ausgerichtet sind, wobei sich der drahtlose Sender durch das Loch in jeder der Befestigungsplatten hindurch erstreckt, nachdem das Wählsystem zusammengebaut wurde.

## Revendications

1. Système de clavier pour le volant de direction d'une automobile, divisé en deux parties connectées par un câble et comprenant chacune :
- un premier logement comprenant une ouverture longitudinale et des ouvertures multiples définies dans celui-ci ;
- une unité de clavier reçue dans le premier logement et comprenant une plaque métallique montée sur le premier logement, une touche de numéros fixée sur la plaque métallique et reçue dans l'ouverture longitudinale dans le premier logement, et des touches multiples de fonction reçues chacune dans l'une correspondante des ouvertures multiples dans le premier logement ;
- une carte de circuit reçue dans le premier logement, la carte de circuit comprenant de multiples commutateurs de touche alignés chacun avec l'une correspondante des touches de fonction et la touche de numéros, un émetteur sans fil monté électriquement sur la carte de circuit pour émettre sans fil des signaux lorsque les commutateurs de touche sont actionnés ;
- un deuxième logement monté sur le premier logement pour former un espace pour recevoir l'unité de clavier et la carte de circuit ;
- un support de pile ou batterie avec une pile ou batterie insérée latéralement dans l'espace entre le premier logement et le deuxième logement, la pile ou batterie étant connectée électriquement à la carte de circuit pour alimenter la carte de circuit lorsque le siège de batterie est inséré dans l'espace entre le premier logement et le deuxième logement ;
- un dispositif de serrage ou pince monté sur un fond du deuxième logement et apte à serrer le volant pour maintenir le système de clavier de télécommunication en place sur le volant pour faciliter l'actionnement.

2. Système de clavier selon la revendication 1, dans lequel le premier logement comprend de multiples languettes ou tenons s'étendant depuis celui-ci et s'étendant à travers la plaque métallique, une butée comportant de multiples passages définis pour recevoir de manière sûre les multiples languettes après leur extension à travers la plaque métallique pour maintenir la plaque métallique en place.

3. Système de clavier selon la revendication 1, dans lequel l'émetteur sans fil s'étend à travers le deuxième logement et émet des signaux vers un ordinateur central par rayons infrarouges.

4. Système de clavier selon la revendication 1, dans lequel l'émetteur sans fil s'étend à travers le deuxième logement et émet des signaux vers un ordinateur central par radiofréquence (RF).

5. Système de clavier selon la revendication 3, dans lequel le dispositif de serrage ou pince comprend une première partie incurvée et une deuxième partie incurvée comportant chacune une plaque de fixation s'étendant latéralement à partir d'un côté de celle-ci et contiguës l'une à l'autre et correspondant à la forme du volant, chaque plaque de fixation comportant un trou défini dans celle-ci et s'alignant l'un avec l'autre, l'émetteur sans fil s'étendant à travers le trou dans chacune des plaques de fixation après l'assemblage du système de clavier.

6. Système de clavier selon la revendication 4, dans lequel le dispositif de serrage ou pince comprend une première partie incurvée et une deuxième partie incurvée comportant chacune une plaque de fixation s'étendant latéralement à partir d'un côté de celle-ci et contiguës l'une à l'autre et correspondant à la forme du volant, chaque plaque de fixation comportant un trou défini dans celle-ci et s'alignant l'un avec l'autre, l'émetteur sans fil s'étendant à travers le trou dans chacune des plaques de fixation après l'assemblage du système de clavier.
